# EUROPEAN PATENT APPLICATION

(11) **EP 1 189 424 A1**
(43) Date of publication of application: **20.03.2002**
(21) Application number: 01307779.7
(22) Date of filing: 12.09.2001
(51) Int. Cl.: H04N 1/00, H04N 1/21

(54) **Digital camera and method of image transmission**

(30) Priority: 13.09.2000 US 662377
(71) Applicant: Hewlett-Packard Company, Palo Alto, CA 94304 (US)
(72) Inventor: Evans, Tracy J., Albany, OR 97321 (US)
(74) Representative: Jackson, Richard Eric

(57) **Abstract**

A digital camera (10) has a lens (14) and an imaging transducer (16) that generates a digital data corresponding to an image formed by the lens. A modem (22, 26) connected to the transducer, and a wireless data transmitter (24, 32) may be connected to the modem, providing communication via a cellular communications network (54, 56) to a computer network (60). The camera may operate by generating digital data representing an image collected by the lens, and by wirelessly transmitting it to a storage device on a computer network, where it may later be downloaded by a user for viewing.

## Description

### Field of the Invention

This invention relates to digital photography, and more particularly to wireless transmission of images.

### Background and Summary of the Invention

Digital photography enables users to take photographs without conventional chemically-based film, providing a number of advantages. A solid state charge coupled device (CCD) records images, which are stored in a memory chip or other recordable media. Because of the cost and size of memory chips and media, the number of images that can be stored is limited, particularly for larger or higher quality images. To provide for storage of more images, removable memory modules or recordable media may be used, although these add significantly to the cost of a consumer device.

Typically, stored images are transferred to another storage medium to free up the memory space for more images. A personal computer may receive the images by several means. The camera may be directly connected via a wired connection to the computer to transfer the image data to the hard disc drive, so that software in the computer may display images on an associated monitor, and so that a connected printer may generate hard copies of the photographs. For cameras with removable media or modules, the media may be read by a reader device wired to the computer. These systems have the disadvantage that they can be challenging for an inexperienced user to install, and the multitude of image formats and installation configurations can be daunting.

The present invention overcomes the limitations of the prior art by providing a digital camera having a lens and an imaging transducer that generates a digital data corresponding to an image formed by the lens. A modem connected to the transducer, and a wireless data transmitter may be connected to the modem, providing communication via a cellular communications network to a computer network. The camera may operate by generating digital data representing an image collected by the lens, and by wirelessly transmitting it to a storage device on a computer network, where it may later be downloaded by a user for viewing.

### Brief Description of the Drawings

Figure 1 shows a block diagram of a camera according to the preferred embodiment of the invention.
Figure 2 shows a block diagram of a camera according to an alternative embodiment of the invention.
Figure 3 shows a block diagram of a camera according to another alternative embodiment of the invention.
Figure 4 shows a block diagram of a network according to the preferred embodiment of the invention.

### Detailed Description of a Preferred Embodiment

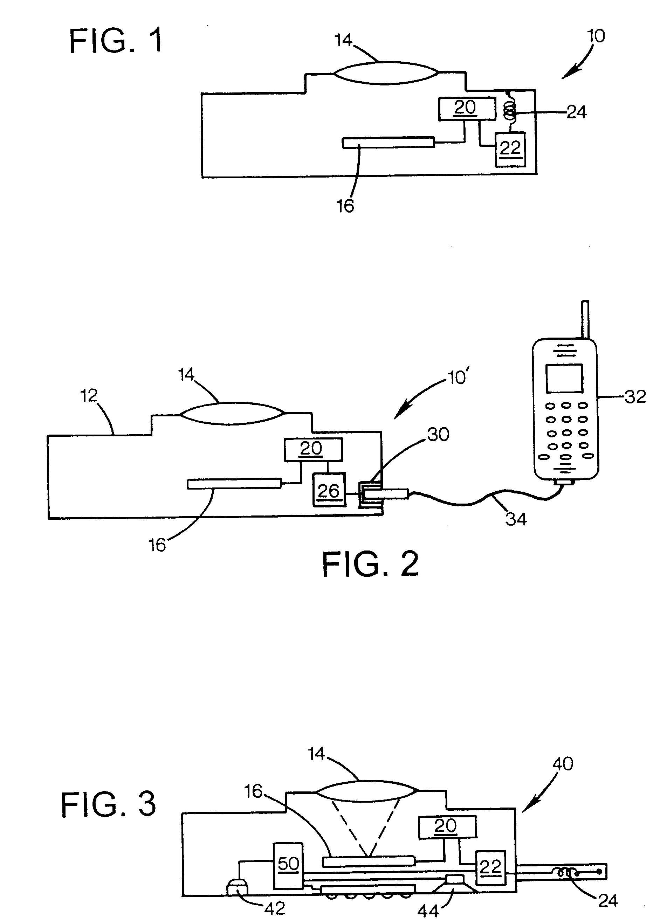

Figure 1 shows a camera 10 having a housing 12 supporting a lens 14. The lens is focused on a CCD 16, which is connected to control and memory circuitry 20 permanently installed within the housing. Cellular telephone circuitry 22 is connected to the memory circuitry, and includes a connected antenna 24 internal to the housing and operable to transmit radio frequency signals generated by the circuitry 22. The cellular circuitry enables communication with a conventional cellular network.

Figure 2 shows an alternative camera 10' that does not include cellular telephone circuitry, but which includes a modem circuitry 26 connected to the memory, and having an external connector 30 to which a telecommunication device such as a cellular telephone 32 is connected via a cable 34 or other means.

Figure 3 shows an imaging cellular telephone 40 having all the camera features of the camera 10 discussed above, but with all necessary components for voice communication. A microphone 42, speaker 44, and keypad 46 are connected to cellular telephone control circuitry 50, which is connected to circuitry 22 for transmission and receipt of communication signals. The circuitry 22 controls the transmission of digital image data from the memory 20.

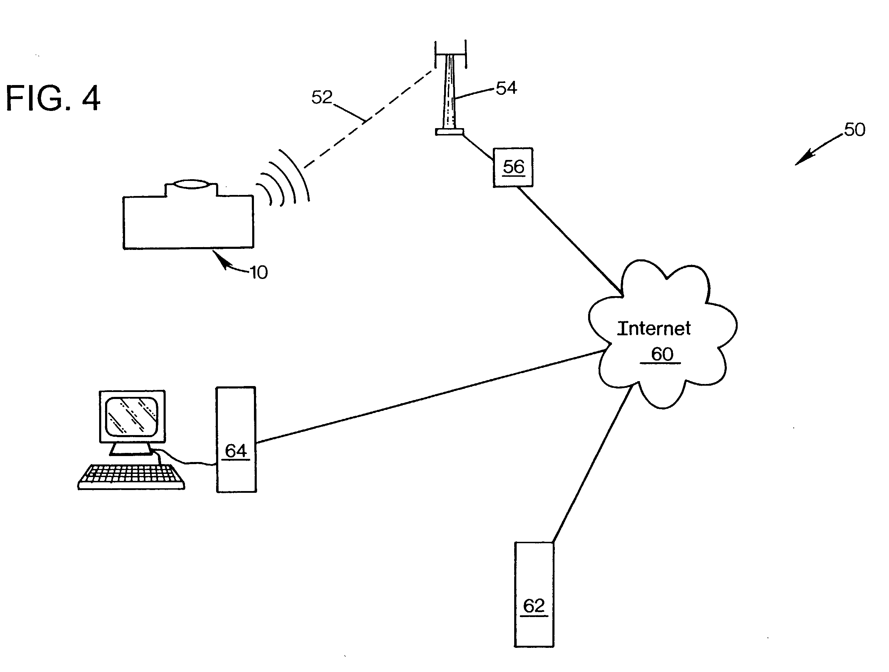

Figure 4 shows a telecommunication network 50 including the camera 10 (or camera 10' or telephone 40) connected via a wireless cellular telephone connection 52 to a cellular receiver base 54, which is connected via a cellular telephone network 56 to the Internet 60. A photographic service company computer 62 is connected to the Internet, as is a user computer 64.

In the preferred embodiment, the user is remote from any computer, and uses the camera to take pictures. As each picture is taken, the image formed on the CCD is converted to a digital data file that is transmitted to the memory circuit in the camera. The memory has limited space, so only a limited number of pictures can be taken. As the memory nears capacity, the camera automatically initiates a cellular telephone connection to the cellular network, and transmits the image data files via the Internet to one of the service computer 62 or the user's own computer 64 for later access.

The memory chip is useful to provide a storage buffer for when the user is not near to a cellular receiver. However, in alternative embodiments, the memory may be of minimal size or omitted entirely, and the image data transmitted from the CCD directly via the network for storage. In such cases, the CCD may be the only required memory element in the camera, storing even images with large data file sizes, which are transmitted to enable taking the next photograph. However, to enable rapid sequential imaging in an environment in which the wireless link has limited bandwidth, some storage buffer is preferred. Also, images generated by the CCD are preferably compressed to reduce file size for speeding transmission. In such cases, the entire original image file may be stored in a memory other than the CCD, or may be sequentially processed and transmitted to avoid the need for a large memory to contain the entire original file. Preferably, the transmitter also includes receiving capabilities, so that error checking and correction information may be transmitted back to the camera from the network, in the manner of conventional modem communications.

The network system may operate in several ways. In the simplest case, the user records and wirelessly uploads photographs, which are transmitted via the Internet to his or her own computer, or to a storage site of an Internet Service Provider to which the user subscribes. The photos are then downloadable to the user's computer, where they may be stored locally, edited, and printed. This is also applicable to photojournalists who may upload image data to a news agency for immediate evaluation or publication.

A second means of operation involves the uploading of image data to a service company that stores the images, and makes them available for viewing. The service company essentially serves as a printer, and has facilities for printing high quality prints of images selected by the user. The printer may employ conventional photographic print paper, or may use high quality color laser printers or the like for generating the prints.

Another embodiment allows users to create photographs even when they do not own cameras, or when they are not carrying their cameras. At participating establishments, cameras are provided that transmit image data to a service to which the establishment subscribes. The user may later visit a web site associated with the establishment or the service, and purchase prints, generating revenue for the service and/or for the establishment. Alternatively, the user may opt to purchase the right to download high quality electronic images for home archiving or printing, based on on-line viewing of smaller sample "proof" images. Establishments suitable for this system may include restaurants, hotels, amusement parks, cruise ships, airports and the like. In public areas, kiosks may offer rental of cameras for this system, possibly including a given number of prints or downloads in the rental fee.

Alternative means may be used to wirelessly transmit image data. For instance, where the camera is in a confined area, such as a restaurant or home interior, infrared beams may be employed to transmit the data by line-of-sight to a transducer connected to a computer or other connected communication device. More preferably, radio frequency modes of transmission other than cellular signals may be used, such as low-power short-range systems used for communicating among computer devices (e.g. Bluetooth communication standard.)

The above system may be used for applications other than creating still images for printing or display. With a high bandwidth communications link, moving images may be recorded and transmitted for storage, essentially combining a video recorder with a radio frequency communication device. Other applications may include security cameras mounted where wiring is impractical.

While the above is discussed in terms of preferred and alternative embodiments, the invention is not intended to be so limited.

## Claims

1. A digital camera (10) comprising:
a lens (14);
an imaging transducer (16) operable to generate digital data corresponding to an image formed by the lens; and
a modem (22, 26) connected to the transducer.

2. The apparatus of claim 1 including a wireless data transmitter (22) connected to the modem, and operable to communicate via a cellular communications network (56) to a computer network (60).

3. The apparatus of claim 2 wherein the wireless data transmitter includes a radio frequency generator.

4. The apparatus of claim 1 including an external connector (30) operable for connection with a wireless communication device.

5. The apparatus of claim 1 including a digital buffer (20) operable to store a limited amount of data.

6. A method of photography comprising:
generating a digital data representation of an image in a recording device (10);
wirelessly transmitting (52) the data to a storage device (62);
receiving the data from the storage device; and
generating an image from the data received from the storage device.

7. The method of claim 11 wherein generating the digital data representation includes optically focusing an image on an electronic sensor (16).

8. The method of claim 11 wherein wirelessly transmitting the data comprises sending the data via a cellular telecommunications connection (52).

9. The method of claim 11 wherein wirelessly transmitting the data comprises modulating the data for telephonic transmission.

10. The method of claim 11 wherein wirelessly transmitting the data comprises transmission to a storage device (62, 64) associated with a computer network (60).
